# EUROPEAN PATENT APPLICATION

(11) **EP 3 081 291 A1**
(43) Date of publication of application: **19.10.2016**
(21) Application number: 14869811.1
(22) Date of filing: 10.12.2014
(51) Int. Cl.: B01J 19/18, C08F 220/06, C08F 220/08

(54) **APPARATUS FOR PREPARING SUPER-ABSORBENT RESIN AND METHOD FOR PREPARING SUPER-ABSORBENT RESIN USING SAME**

(30) Priority: 11.12.2013 KR 20130153685
(71) Applicant: Hanwha Chemical Corporation, Seoul 100-797 (KR)
(72) Inventor: CHOI, Dae Keon, Jeonju-si Jeollabuk-do 560-792 (KR); KIM, Eui Duk, Daejeon 305-720 (KR); KIM, Ji Yeon, Dalseong-gun Daegu 711-765 (KR); PAIK, Choong Hoon, Daejeon 305-720 (KR); SIM, Yu Jin, Daejeon 305-720 (KR); OH, Seok Heon, Daejeon 305-720 (KR); LEE, Min Ho, Pohang-si Gyeongsangbuk-do 791-786 (KR)
(74) Representative: Glawe, Delfs, Moll
(86) International application number: PCT/KR2014/012144
(87) International publication number: WO 2015/088246

(57) **Abstract**

The present disclosure relates to an apparatus for preparing super-absorbent polymer (SAP) and a method for preparing SAP using the same. The apparatus for preparing SAP comprises, a belt formed between two or more rotary shafts and traveling in a predetermined direction upon the rotation of the rotary shafts; and a feeding unit feeding a monomer composition to the belt, wherein the belt includes recess patterns at a bottom thereof.

## Description

### [TECHNICAL FIELD]

The present disclosure relates to an apparatus for preparing super-absorbent polymer (SAP) and a method for preparing SAP using the same.

### [BACKGROUND ART]

A super-absorbent polymer (SAP) is a synthetic polymer material having a function of absorbing about 500 to about 1000 times its weight of water, and it has been differently called a super absorbency material (SAM), an absorbent gel material (AGM), and so on by developing enterprises. The SAP started to be commercialized for sanitary items, and is now being used widely as a water combination soil for horticulture, a water-stop material for civil engineering and construction, a nursery sheet, a freshness preservative in the food distribution field, a poultice material, and the like in addition to being used in sanitary fittings like a paper diaper for a child.

An inverse suspension polymerization method or an aqueous polymerization method is known as a method to prepare a SAP. For example, the inverse phase polymerization method is disclosed in Japanese Patent Application Publication Nos. (Sho) 56-161408, (Sho) 57-158209, and (Sho) 57-198714. As examples of the aqueous polymerization method, a thermal polymerization method that polymerizes a polymer gel by applying heat, and a photo-polymerization method that polymerizes an aqueous solution by applying ultraviolet (UV) rays and the like are known.

In general, a SAP product is prepared by subjecting a polymer obtained by polymerization to cutting, pulverization, drying, crushing, and surface treatment classification processes. However, in a case in which the pulverization process is performed using an extruder or kneader, the polymer may be attached to rotating screws and may thus be irregularly pulverized, lowering the efficiency of the drying process.

If the polymer appears to be in the form of lumps after the drying process, an additional pulverization process is needed, which, however, may cause fine particles to be formed. Such fine particles may lower the quality of a SAP product and may cause product loss.

### [DISCLOSURE]

### [Technical Problems]

To address the aforementioned problems, exemplary embodiments of the present disclosure provide an apparatus for preparing SAP for obtaining a uniformly pulverized SAP and a method for preparing SAP using the SAP preparation apparatus.

However, exemplary embodiments of the present disclosure are not restricted to those set forth herein. The above and other exemplary embodiments of the present disclosure will become more apparent to one of ordinary skill in the art to which the present disclosure pertains by referencing the detailed description of the present disclosure given below.

### [Technical Solutions]

According to an exemplary embodiment of the invention, an apparatus for preparing super-absorbent polymer (SAP), comprising: a belt formed between two or more rotary shafts and traveling in a predetermined direction upon the rotation of the rotary shafts; and a feeding unit feeding a monomer composition to the belt, wherein the belt includes recess patterns at a bottom thereof.

In an exemplary embodiment, the recess patterns may be formed in series.

In an exemplary embodiment, the recess patterns may have at least one shape selected from the group consisting of polygonal and circular shapes.

In an exemplary embodiment, the polygonal shape may include at least one shape selected from the group consisting of triangular, rectangular, pentagonal, and hexagonal shapes.

In an exemplary embodiment, an average diameter of the recess patterns may be in the range of 1 cm to 10 cm.

In an exemplary embodiment, a depth of the recess patterns may be in the range of 1 cm to 10 cm.

In an exemplary embodiment, the feeding unit may include a number of nozzles corresponding to the number of recess patterns at locations corresponding to the recess patterns, respectively.

According to an exemplary embodiment of the invention, a method for preparing SAP using the apparatus for preparing SAP of the invention, the method for preparing SAP comprising: feeding a monomer composition to the recess patterns of the belt via the feeding unit; and polymerizing the monomer composition.

In an exemplary embodiment, the monomer composition may comprise: at least one anionic monomer selected from the group consisting of acrylic acid, methacrylic acid, maleic anhydride, fumaric acid, crotonic acid, itaconic acid, 2-acryloylethane sulfonic acid, 2-methacryloylethane sulfonic acid, 2-(meth)acryloylpropane sulfonic acid, and 2-(meth)acrylamide-2-methyl propane sulfonic acid, or a salt thereof; at least one nonionic hydrophilic monomer selected from the group consisting of (meth)acrylamide, N-substituted (meth)acrylate, 2-hydroxyethyl(meth)acrylate, 2-hydroxypropyl(meth)acrylate, methoxy polyethylene glycol (meth)acrylate, and polyethylene glycol (meth)acrylate; or at least one amino group-containing unsaturated monomer selected from the group consisting of (N,N)-dimethylaminoethyl(meth)acrylate and (N,N)-dimethylaminopropyl(meth)acrylate or a quaternary compound thereof.

In an exemplary embodiment, the monomer composition may further comprise at least one additive selected from the group consisting of a photo-polymerization initiator, a thermal polymerization initiator, and a crosslinking agent.

In an exemplary embodiment, the polymerizing the monomer composition, may comprise thermal polymerizing, photo-polymerizing, or both.

In an exemplary embodiment, the method may further comprise: discharging a polymer obtained by the polymerizing the monomer composition via an outlet.

In an exemplary embodiment, the method may further comprise: drying the polymer discharged via the outlet; and pulverizing the dried polymer.

### [Advantageous Effects]

According to exemplary embodiments of the invention, an excellent super-absorbent polymer (SAP) can be provided by using a SAP preparation apparatus to reduce the load of a pulverization process and reduce damage that may be caused by over-pulverization to cross-linking polymerization rings.

Other features and aspects will be apparent from the following detailed description, the drawings, and the claims.

### [BRIEF DESCRIPTION OF DRAWINGS]

FIG. 1 is a perspective view of an apparatus for preparing super-absorbent polymer (SAP) according to an exemplary embodiment of the present invention.
FIG. 2 is a plan view of the apparatus for preparing SAP according to the exemplary embodiment of the invention.
FIG. 3 is a plan view of an apparatus for preparing SAP according to another exemplary embodiment of the present invention.

### [BEST MODES FOR CARRYING OUT THE INVENTION]

Features of the invention and methods of accomplishing the same may be understood more readily by reference to the following detailed description of preferred embodiments and the accompanying drawings.

The invention may, however, be embodied in many different forms and should not be construed as being limited to the embodiments set forth herein. Rather, these embodiments are provided so that this disclosure will be thorough and complete and will fully convey the concept of the invention to those skilled in the art, and the invention will only be defined by the appended claims. Like numbers refer to like elements throughout this specifications. In the drawings, the thickness of layers and regions are exaggerated for clarity.

It will be understood that when an element or layer is referred to as being "on" another element or layer, the element or layer can be directly on another element or layer or intervening elements or layers. In contrast, when an element is referred to as being "directly on" another element or layer, there are no intervening elements or layers present. Spatially relative terms, such as "below," "lower," "under," "above," "upper" and the like, may be used herein for ease of description to describe the relationship of one element or feature to another element(s) or feature(s) as illustrated in the figures. It will be understood that the spatially relative terms are intended to encompass different orientations of the device in use or operation, in addition to the orientation depicted in the figures.

It will be understood that, although the terms first, second, third, etc., may be used herein to describe various elements or components should not be limited by these terms. These terms are only used to distinguish one element or component from another element or component. Thus, a first element or component discussed below could be termed a second element or component without departing from the teachings of the invention.

### Apparatus for preparing Super-Absorbent Polymer (SAP)

Exemplary embodiments of the present disclosure will hereinafter be described with reference to the accompanying drawings.

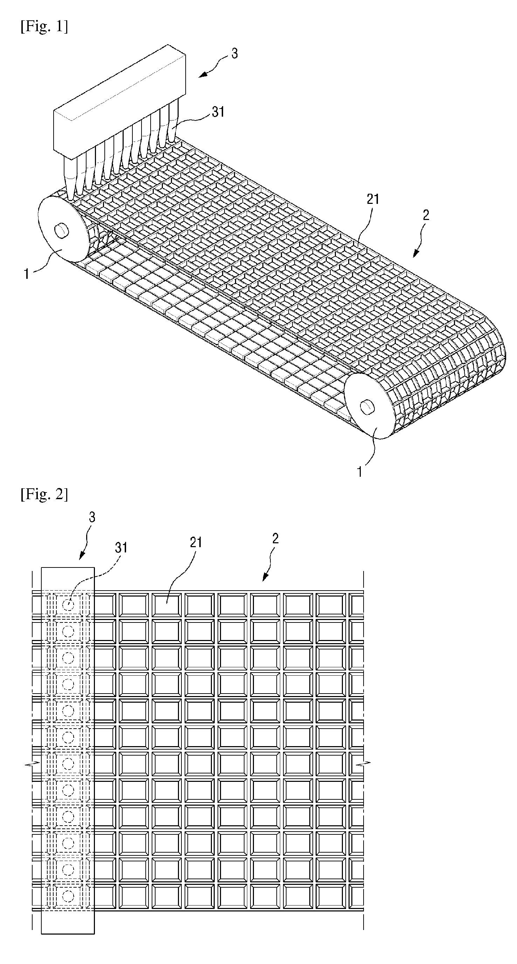

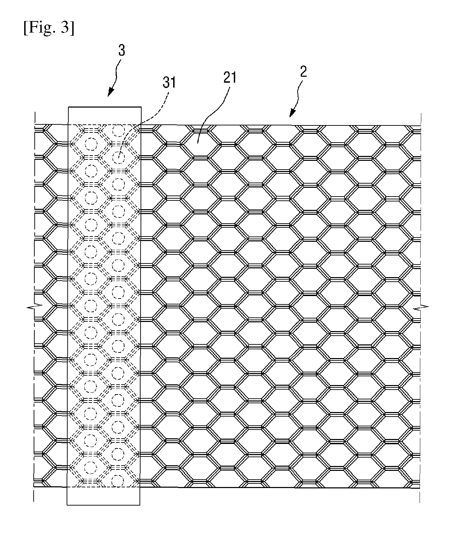

FIG. 1 is a perspective view of an apparatus for preparing super-absorbent polymer (SAP) according to an exemplary embodiment of the present invention. FIG. 2 is a plan view of the apparatus for preparing SAP according to the exemplary embodiment of the invention. FIG. 3 is a plan view of an apparatus for preparing SAP according to another exemplary embodiment of the present invention.

Referring to FIGS. 1 through 3, the apparatus for preparing SAP includes two rotary shafts 1 and 1', a belt 2, which is formed between the rotary shafts 1 and 1' and travels in a predetermined direction upon the rotation of the rotary shafts 1 and 1', and a feeding unit 3, which feeds a monomer composition to the belt 2, and the belt 2 includes recess patterns 21 at the bottom thereof.

Two or more rotary shafts 1 and 1' may be provided depending on the length or a method of application of the belt 2, and a power source such as a motor may be connected to make the belt 2, which has a flat bottom, travel in the predetermined direction. In an exemplary embodiment, the rotary shafts 1 and 1' may be located at the same height with respect to the water level, but may be installed at different heights to form a slope between the water level and the plane on which the belt 2 travels.

The feeding unit 3 feeds compounds such as a monomer composition necessary for a polymerization reaction to take place to the recess patterns 21 of the belt 2, and the feeding speed of the monomer composition may be appropriately determined in consideration of the length, width, and traveling speed of the belt 2 and the duration and intensity of application of hot air or light.

The feeding unit 3 may include a number of nozzles 31 corresponding to the number of recess patterns 21 at locations corresponding to the recess patterns 21, respectively. Alternatively, the feeding unit 3 may include a single linear nozzle, instead of including the individual nozzles 31 corresponding to the recess patterns 21, respectively. Since the individual nozzles 31 are included, the monomer composition may be uniformly fed to each of the recess patterns 21, and thus, the uniformity of a polymer may be improved.

The belt 2 may be connected between the rotary shafts 1 and 1' and may allow the monomer composition to be polymerized by heat or light, while traveling in the predetermined direction. The belt 2 may include the recess patterns 21 at the bottom thereof. FIGS. 1 and 2 illustrate the recess patterns 21 as being rectangular, but the present disclosure is not limited thereto. For example, the recess patterns 21 may have at least one shape selected from the group consisting of polygonal and circular shapes, and the polygonal shape may be at least one selected from the group consisting of triangular, rectangular, pentagonal, and hexagonal shapes. FIG. 3 illustrates hexagonal recess patterns 21.

In an exemplary embodiment, the recess patterns 21 may be an array of patterns of the same shape, or may be an array of patterns of different shapes.

The recess patterns 21 may be set to various applications according to sizes in which needs to process. For example, the recess patterns 21 may be set to an average diameter of 1 cm to 10 cm, but the present disclosure is not limited thereto. In a case in which the recess patterns 21 have a diameter of less than 1 cm, too much dead space may undesirably be formed in the belt 2. On the other hand, in a case in which the recess patterns 21 have a diameter of greater than 10 cm, an additional precutting process may undesirably be needed. Accordingly, the average diameter of the recess patterns 21 may be set to a range of 2 cm to 5 cm.

The recess patterns 21 may also be set to various applications according to depths in which needs to process. For example, the recess patterns 21 may be set to a depth of 1 cm to 10 cm, but the present disclosure is not limited thereto. In a case in which the recess patterns 21 have a depth of less than 1 cm, polymers from adjacent recess patterns 21 are highly likely to be merged with one another, and as a result, polymers may not be able to be prepared in the form of separate chips. On the other hand, in a case in which the recess patterns 21 have a depth of greater than 10 cm, an additional precutting process may undesirably be needed. Accordingly, the depth of the recess patterns 21 may be set to a range of 2 cm to 5 cm.

The belt 2 may be formed of a material with flexibility so as to be movable in the predetermined direction with the aid of the rotary shafts 1 and 1'. Flexibility may be imparted to the belt 2 by adjusting the shape of the recess patterns 21.

The belt 2 may be formed of a material with durability, anticorrosion, and strength. In an exemplary embodiment, the belt 2 may be formed of silicone, rubber, or Teflon, but the present disclosure is not limited thereto.

Each of the recess patterns 21 may consist of a bottom and walls, and the bottom may be flat or concave. The walls may be perpendicular to the bottom, and may become narrower at a predetermined angle, closer to the bottom.

### Method for preparing Super-Absorbent Polymer (SAP)

A method for preparing SAP according to an exemplary embodiment of the present disclosure will hereinafter be described with reference to FIGS. 1 through 3.

The method for preparing SAP includes: feeding, a monomer composition to the recess patterns 21 of the belt 2 via the feeding unit 3, using the apparatus for preparing SAP; and polymerizing the monomer composition.

The monomer composition may be fed to the belt 2 at an appropriate speed in consideration of the width, length, and moving speed of the belt 2 and the duration, range, and intensity of application of heat and/or light.

The monomer composition may comprise a water-soluble ethylene-based unsaturated monomer, and as the monomer, any monomer generally used for the preparation of the SAP may be used unlimitedly. For example, the monomer may include at least one selected from the group consisting of an anionic monomer, a salt of the anionic monomer, a nonionic hydrophilic monomer, an amino group-containing unsaturated monomer, and a quaternary compound of the amino group-containing unsaturated monomer.

In an exemplary embodiment, the monomer may include: at least one anionic monomer selected from the group consisting of acrylic acid, methacrylic acid, maleic anhydride, fumaric acid, crotonic acid, itaconic acid, 2-acryloylethane sulfonic acid, 2-methacryloylethane sulfonic acid, 2-(meth)acryloylpropane sulfonic acid, and 2-(meth)acrylamide-2-methyl propane sulfonic acid, or a salt thereof; at least one nonionic hydrophilic monomer selected from the group consisting of (meth)acrylamide, N-substituted (meth)acrylate, 2-hydroxy-ethyl(meth)acrylate, 2-hydroxypropyl(meth)acrylate, methoxy polyethylene glycol (meth)acrylate, and polyethylene glycol (meth)acrylate; or at least one amino group-containing unsaturated monomer selected from the group consisting of (N,N)-dimethylaminoethyl(meth)acrylate and (N,N)-dimethylaminopropyl(meth)acrylate or a quaternary compound thereof.

The concentration of the water-soluble ethylene-based unsaturated monomer in the monomer composition may be adequately selected in consideration of polymerization time and reaction conditions (such as the feeding speed of the monomer composition, the duration, range and intensity of the application of heat and/or light, and the width, length and moving speed of the belt). In an exemplary embodiment, the concentration of the water-soluble ethylene-based unsaturated monomer in the monomer composition may be 40 wt% to 60 wt%, and this concentration range may be effective in terms of monomer solubility and economic feasibility.

The monomer composition may further include at least one additive selected from the group consisting of a photo-polymerization initiator, a thermal polymerization initiator, and a crosslinking agent. The type of the polymerization initiator included in the monomer composition may be adequately selected depending on whether thermal polymerization, photo-polymerization, or both are to be performed.

The type of the photo-polymerization initiator is not particularly limited, but one or more selected from among an acetophenone derivative such as diethoxy acetophenone, 2-hydroxy-2-methyl-1-phenylpropane-1-on, 4-(2-hydroxy ethoxy)phenyl-(2-hydroxy)-2-propyl ketone, or 1-hydroxycyclohexylphenyl ketone, a benzoin alkyl ether such as benzoin methyl ether, benzoin ethyl ether, benzoin isopropyl ether, or benzoin isobutyl ether, a benzophenone derivative such as methyl o-benzoylbenzoate, 4-phenyl benzophenone, 4-benzoyl-4'-methyl-diphenyl sulfide, or (4-benzoyl benzyl)trimethyl ammonium chloride, a thioxanthone-based compound, an acyl phosphine oxide derivative such as bis(2,4,6-trimethylbenzoyl)-phenyl phosphine oxide or diphenyl(2,4,6-trimethylbenzoyl)-phosphine oxide, and an azo-based compound such as 2-hydroxy methyl propionitrile or 2,2'-{azobis(2-methyl-N-(1,1'-bis(hydroxymethyl)-2-hydroxy-ethyl)propionamide) may be used alone, or in combination, as the photo-polymerization initiator.

The type of the thermal polymerization initiator is not particularly limited, but one or more selected from among an azo-based initiator, a peroxide-based initiator, a redox-based initiator, and an organic halide initiator may be used alone, or in combination, as the thermal polymerization initiator. Sodium persulfate (Na2S2O8) or potassium persulfate (K2S2O8) may also be used as the thermal polymerization initiator, but the present disclosure is not limited thereto.

The contents of the photo-polymerization initiator and the thermal polymerization initiator in the monomer composition may be adequately selected as long as an adequate polymerization initiation effect is ensured. In an exemplary embodiment, the photo-polymerization initiator and the thermal polymerization initiator may be contained in amounts of 0.005 to 0.1 parts by weight and 0.01 to 0.5 parts by weight, respectively, per 100 parts by weight of the monomer, but the present disclosure is not limited thereto.

A cross-linking agent comprising one or more functional groups that can react with the substituent of the monomer of the monomer composition and one or more ethylene-based unsaturated monomers or a cross-linking agent comprising two or more functional groups that can react with the substituent of the monomer and/or a substituent formed by the hydrolysis of the monomer of the monomer composition may be used as the cross-linking agent.

In an exemplary embodiment, C8-C12 bis acrylamide, C8-C12 bis methacrylamide, poly(meth)acrylate of C2-C10 polyol, or poly(meth)allyl ether of C2-C10 polyol may be used as the cross-linking agent. More specifically, N,N'-methylenebis(meth)acrylate, ethyleneoxy(meth)acrylate, polyethyleneoxy(meth)acrylate, propyleneoxy(meth)acrylate, glycerine diacrylate, glycerine triacrylate, trimethylol triacrylate, triallyl amine, triaryl cyanurate, triallyl isocyanate, polyethylene glycol, diethylene glycol, propylene glycol, or a mixture of two or more thereof may be used as the cross-linking agent, but the present disclosure is not limited thereto.

The content of the cross-linking agent in the monomer composition may be adequately selected as long as an adequate cross-linking effect is ensured. In an exemplary embodiment, the cross-linking agent may be contained in the amount of 0.01 to 0.5 parts by weight per 100 parts by weight of the monomer, but the present disclosure is not limited thereto.

Thermal polymerization, photo-polymerization, or both may be performed to polymerize the monomer composition. A hot air blower may be further provided to perform thermal polymerization, or a polymerization apparatus including an irradiation unit may be used to perform photo-polymerization.

The type of the irradiation unit is not particularly limited as long as the irradiation unit is capable of applying light to cause a polymerization reaction. For example, the irradiation unit may be configured to apply ultraviolet (UV) light to the monomer composition from above the belt 2. Any type of UV irradiation unit may be used as the irradiation unit. For a uniform application of UV light and for efficiency, a UV light source such as a xenon (Xe) lamp, a mercury lamp, a metal halide lamp may be used as the irradiation unit.

The wavelength of UV light applied by the irradiation unit to cause a photo-polymerization reaction is not particularly limited, but may be in the range of, for example, 200 nm to 400 nm. The duration of application of the UV light is not particularly limited, but may be in the range of, for example, 10 seconds to 5 minutes. In an exemplary embodiment, the duration of application of the UV light may be in the range of 20 seconds to 3 minutes, but the present disclosure is not limited thereto. The intensity of application of the UV light may be in the range of, for example, 0.5 mW/cm2 to 500 mW/cm2. In these ranges, a valid polymerization reaction may be caused, and crosslinking points in a polymer may be prevented from being broken by an excessive application of the UV light.

The duration and the intensity of application of the UV light may be dependent upon each other and may be inversely proportional to each other. The duration and the intensity of application of the UV light may be determined within the aforementioned ranges so that a valid polymerization reaction may occur.

The SAP preparation method may further include discharging a polymer obtained by the polymerization of the monomer composition via an outlet. The SAP preparation method may further include pulverizing, drying, and additionally pulverizing the polymer discharged via the outlet.

The type of a pulverization method used in the pulverization of the polymer is not particularly limited, but a device for cutting and extruding a rubber-phase elastic material may be used. In an exemplary embodiment, a cutter-type cutter, a chopper-type cutter, a kneader-type cutter, a vibration mill, an impact mill, or a friction-type mill may be used, but the present disclosure is not limited thereto.

A typical drier and a typical heating furnace may be used in the drying of the polymer. In an exemplary embodiment, a hot-air dryer, a fluid bed dryer, an air current dryer, an infrared dryer, or a dielectric heating drier may be used, the present disclosure is not limited thereto. The temperature at which the polymer is dried is not particularly limited, but in order to prevent thermal deterioration of the polymer and to efficiently dry the polymer, the polymer may be dried at a temperature of 100°C to 200°C.

While exemplary embodiments have been shown and described above, it will be apparent to those skilled in the art that modifications and variations could be made without departing from the spirit and scope of the invention as defined by the appended claims. The exemplary embodiments should be considered in a descriptive sense only and not for purposes of limitation.

## Claims

1. An apparatus for preparing super-absorbent polymer (SAP), comprising:
a belt formed between two or more rotary shafts and traveling in a predetermined direction upon the rotation of the rotary shafts; and
a feeding unit feeding a monomer composition to the belt, wherein the belt includes recess patterns at a bottom thereof.

2. The SAP preparation apparatus of claim 1, wherein the recess patterns are formed in series.

3. The SAP preparation apparatus of claim 1, wherein the recess patterns have at least one shape selected from the group consisting of polygonal and circular shapes.

4. The SAP preparation apparatus of claim 3, wherein the polygonal shape includes at least one shape selected from the group consisting of triangular, rectangular, pentagonal, and hexagonal shapes.

5. The SAP preparation apparatus of claim 1, wherein an average diameter of the recess patterns is in the range of 1 cm to 10 cm.

6. The SAP preparation apparatus of claim 1, wherein a depth of the recess patterns is in the range of 1 cm to 10 cm.

7. The SAP preparation apparatus of claim 1, wherein the feeding unit includes a number of nozzles corresponding to the number of recess patterns at locations corresponding to the recess patterns, respectively.

8. A method for preparing SAP using the apparatus for preparing SAP of any one of claims 1 to 7, the method for preparing SAP comprising:
feeding a monomer composition to the recess patterns of the belt via the feeding unit; and
polymerizing the monomer composition.

9. The method for preparing SAP of claim 8, wherein the monomer composition comprises: at least one anionic monomer selected from the group consisting of acrylic acid, methacrylic acid, maleic anhydride, fumaric acid, crotonic acid, itaconic acid, 2-acryloylethane sulfonic acid, 2-methacryloylethane sulfonic acid, 2-(meth)acryloylpropane sulfonic acid, and 2-(meth)acrylamide-2-methyl propane sulfonic acid, or a salt thereof;
at least one nonionic hydrophilic monomer selected from the group consisting of (meth)acrylamide, N-substituted (meth)acrylate, 2-hydroxyethyl(meth)acrylate, 2-hydroxy-propyl(meth)acrylate, methoxy polyethylene glycol (meth)acrylate, and polyethylene glycol (meth)acrylate; or at least one amino group-containing unsaturated monomer selected from the group consisting of (N,N)-dimethylaminoethyl(meth)acrylate and (N,N)-dimethylaminopropyl(meth)acrylate or a quaternary compound thereof.

10. The method for preparing SAP of claim 9, wherein the monomer composition further comprises at least one additive selected from the group consisting of a photo-polymerization initiator, a thermal polymerization initiator, and a crosslinking agent.

11. The method for preparing SAP of claim 8, wherein the polymerizing the monomer composition, comprises thermal polymerizing, photo-polymerizing, or both.

12. The method for preparing SAP of claim 8, further comprising:
discharging a polymer obtained by the polymerizing the monomer composition via an outlet.

13. The method for preparing SAP of claim 12, further comprising:
drying the polymer discharged via the outlet; and
pulverizing the dried polymer.
